# EUROPEAN PATENT SPECIFICATION

(11) **EP 2 351 273 B1**
(45) Date of publication and mention of the grant of the patent: **05.09.2012**
(21) Application number: 09774702.6
(22) Date of filing: 26.10.2009
(51) Int. Cl.: H04J 11/00

(54) **ROOT SPREADING CODE BASED ASSIGNMENT FOR HSDPA**
AUF WURZELSPREIZCODE BASIERENDE ZUWEISUNG FÜR HSDPA
AFFECTATION POUR HSDPA BASÉE SUR DES CODES D'ÉTALEMENT RACINES

(30) Priority: 29.10.2008 US 260641
(43) Date of publication of application: 03.08.2011
(60) Divisional application: 12177274.3
(73) Proprietor: Telefonaktiebolaget L M Ericsson (publ), 164 83 Stockholm (SE)
(72) Inventor: WANG, Yi-Pin Eric, Fremont CA 94539 (US); BOTTOMLEY, Gregory, E., Cary NC 27518 (US)
(74) Representative: HOFFMANN EITLE
(86) International application number: PCT/IB2009/007226
(87) International publication number: WO 2010/049782

(56) References cited:
- WO-A1-2006/105333
- CHENG R-G ET AL: "OVSF CODE CHANNEL ASSIGNMENT FOR IMT-2000" VTC 2000-SPRING. 2000 IEEE 51ST. VEHICULAR TECHNOLOGY CONFERENCE PROCEEDINGS. TOKYO, JAPAN, MAY 15-18, 2000; [IEEE VEHICULAR TECHNOLGY CONFERENCE], NEW YORK, NY : IEEE, US, vol. 3, 15 May 2000 (2000-05-15), pages 2188-2192, XP000968392 ISBN: 978-0-7803-5719-8

## Description

### TECHNICAL FIELD

The present invention relates in general to the wireless telecommunications field and, in particular, to a base station that uses a root spreading code based code assignment to transmit signals to a mobile station. The mobile station can then suppress intra-block interference by effectively using a joint detection technique or a non-linear equalization technique to detect the transmitted symbols.

### BACKGROUND

The following abbreviations are herewith defined, at least some of which are referred to within the following description of the prior art and the present invention.
- BDFE: Block Decision Feedback Equalizer
- BER: Bit Error Rate
- CDMA: Code-Division Multiple Access
- CPICH: Common Pilot Channel
- CRC: Cyclic Redundancy Check
- FEC: Forward Error Correction
- G-Rake: Generalized Rake Receiver
- HSDPA: High-Speed Downlink Packet Access
- HS-SCCH: High-Speed Shared Control Channel
- ISI: Intersymbol Interference
- JD: Joint Detection
- MMSE: Minimum Mean-Square Error
- MIMO: Multiple-Input-Multiple-Output
- OVSF: Orthogonal Variable Spreading Factor
- QAM: Quadrature Amplitude Modulation
- SF: Spreading Factor
- SIC: Successive Interference Cancellation
- TDM: Time-Division Multiplexing
- TTI: Transmission Time Interval
- UE: User Equipment
- WCDMA: Wideband Code-Division Multiple Access

Today there is a high level of interest in improving the reception performance of mobile stations configured for third generation cellular systems which implement the HSDPA provision of the WCDMA standard. These mobile stations commonly use linear equalization such as, for example, G-Rake and MMSE chip equalization to improve the reception performance. In such approaches, the mobile station models the interference as colored noise and interference suppression is then achieved through exploiting spatial and temporal correlation of the interference. The mobile station's use of linear equalization to suppress interference has worked well in the past with HSDPA.

However, HSDPA has evolved since its introduction and continues to evolve to support higher and higher order modulations and MIMO. For instance, the current technical specification "3rd Generation Partnership Project: Technical Specification Group Radio Access Network; Spreading and Modulation (FDD)(Release 7)" 3GPP TS 25.213 version 7.3, Sept., 2007 has standardized 64-QAM for single stream (non-MIMO) transmissions. Plus, it is expected that in release 8, 64-QAM will also be standardized for MIMO transmissions as well. Thus, as the standards move towards higher and higher bit rates, the mobile terminals use of linear equalization will gradually reach a performance bottleneck, resulting in a larger and larger gap from the so-called matched filter bound, which is the theoretical performance upper bound (or bit error rate lower bound) that can not be exceeded. Accordingly, there is a need to address this problem and other problems associated with the higher bit rates of current and future HSDPA. This problem and other problems are satisfied by the present invention.

Cheng R-G et al.: "OVSF Code Channel Assignment for IMT-2000" VTC 2000-Spring, 2000 IEEE 51st. Vehicular Technology Conference Proceedings, Tokyo, Japan, May 15-18, 2000; [IEEE Vehicular Technology Conference], New York, NY : IEEE, US, vol. 3, 15 May 2000, pages 2188-2192 discloses a base station that implements a code channel assignment method that supports as many users as possible with less complexity. The base station (BS) upon receiving a call setup request has to decide which codes (with different spreading factors (SFs)) should be assigned to the user equipment (UE). The proposed code channel assignment method is based on the available codes currently held by the BS and the requirement of the UE. For example, one UE can use either one code (C_{4,1}) or two codes (C_{8,1} and C_{8,2}) as the channelization codes. Under this situation, the proposed code channel assignment scheme requires that the least codes namely one code (C_{4,1}) should be a preferred choice by the BS. WO 2006/105333 A1 (Published 05.10.2006) discloses a high speed data packet access (HSDPA) system where a base transceiver station transmits to each HSPDA-enabled user equipment device control information regarding the allocation of HSDPA codes and associated modulation techniques for other HSDPA-enabled UEs. In one case, the base transceiver station transmits control information indicating which codes will be used to send downlink payload data (data other than control data of the radio network) to the HSDPA-enabled UE, and the modulation that will be used for transmission of the downlink payload data. Additionally, the base transceiver station transmits control information to the HSDPA-enabled UE regarding code allocation(s) and assigned modulation technique (s) for the other HSDPA-enabled UEs in the same cell or site.

### SUMMARY

A base station, a mobile station, a communication network, and various methods are cited in the independent claims.

In one aspect, the present invention provides a base station and a method that: (a) checks whether a root code of a lower spreading factor, SF, has all of its higher spreading factor descendants assigned to a mobile station; (b) if no, then use the higher spreading factor descendants to transmit symbols to the mobile station; and (c) if yes, then use the root code to transmit the symbols to the mobile station. The base station use of the root code to serve the mobile station is desirable because it enables the mobile station to use nonlinear equalization or joint detection to detect the transmitted symbols.

In another aspect, the present invention provides a mobile station and method that: (a) receives a signal on a control channel from a base station, where the signal indicates a code allocation which is to be used to interact with the base station; (b) receives baseband samples originated by the base station; and (c) uses a root code to detect the baseband samples received from the base station, if all descendant codes of the root code are allocated according to the control channel. This is possible because the base station has used the root code in its transmission to enable nonlinear equalization or joint detection at the mobile station to detect the transmitted symbols.

In still yet another aspect, the present invention provides a communications network which includes a mobile station and a base station where the base station: (a) checks whether a root code of a lower spreading factor, SF, has all of its higher spreading factor descendants assigned to a mobile station; (b) if no, then uses the higher spreading factor descendants to transmit symbols to the mobile station; and (c) if yes, then uses the root code to transmit the symbols to the mobile station. The base station use of the root code to serve the mobile station is desirable because it enables the mobile station to use nonlinear equalization or joint detection to detect the transmitted symbols.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

A more complete understanding of the present invention may be obtained by reference to the following detailed description when taken in conjunction with the accompanying drawings:
FIGURE 1 (PRIOR ART) is a diagram of a communications network including a conventional base station that communicates with a conventional mobile station utilizing a traditional HSDPA transmission;
FIGURE 2 (PRIOR ART) is a diagram illustrating in greater detail how the conventional base station of FIGURE 1 generates the traditional HSDPA transmission that is transmitted to the conventional mobile station;
FIGURE 3 (PRIOR ART) is a diagram illustrating in greater detail how the conventional mobile station of FIGURE 1 uses a linear equalization technique to detect symbols in the traditional HSDPA transmission which was received from the conventional base station;
FIGURE 4 is a diagram illustrating a communications network including a base station that utilizes a root spreading codes based code assignment technique to serve a mobile station in accordance with an embodiment of the present invention;
FIGURE 5 is a diagram illustrating a communications network including a base station that communicates with the mobile station utilizing an exemplary HSDPA transmission in accordance with an embodiment of the present invention;
FIGURE 6 is a diagram illustrating in greater detail the mobile station shown in FIGURE 5 where the mobile station has a BDFE-JD receiver that suppresses intra-block interference by jointly detecting symbols within a symbol block received within the exemplary HSDPA transmission signal in accordance with an embodiment of the present invention;
FIGURES 7 and 8 are graphs indicating the results of simulation tests that where conducted to confirm the benefit of having the base station implement a root spreading codes based code assignment technique and a mobile station implement a joint detection technique in accordance with an embodiment of the present invention;
FIGURE 9 is a diagram of a communications network where a base station uses 3 codes of SF 4 and 3 codes of SF 16 in an exemplary HSDPA transmission which is transmitted to a mobile station in accordance with another embodiment of the present invention; and
FIGURE 10 is a diagram of a communications network where the base station forms separate codewords by having short symbols (SF 4) form codeword 1 and long symbols (SF16) form codeword 2 which are part of an exemplary HSDPA transmission that is transmitted to the mobile station in accordance with another embodiment of the present invention.

### DETAILED DESCRIPTION

In the following description, a brief discussion about a conventional HSDPA base station and a conventional HSDPA mobile station is provided first and then a detailed discussion is provided to describe details that enable a thorough understanding about several exemplary embodiments of the base station (and corresponding method) and the mobile station (and corresponding method) of the present invention. However, it will be apparent to one having ordinary skill in the art and having had the benefit of the present disclosure that the present invention may be practiced in other embodiments that depart from the specific details disclosed herein. Moreover, it will be apparent to one having ordinary skill in the art that the descriptions of the new base station and the new mobile station (of which there can be any number in a communications network) will omit well-known components so as not to obscure the description of the present invention.

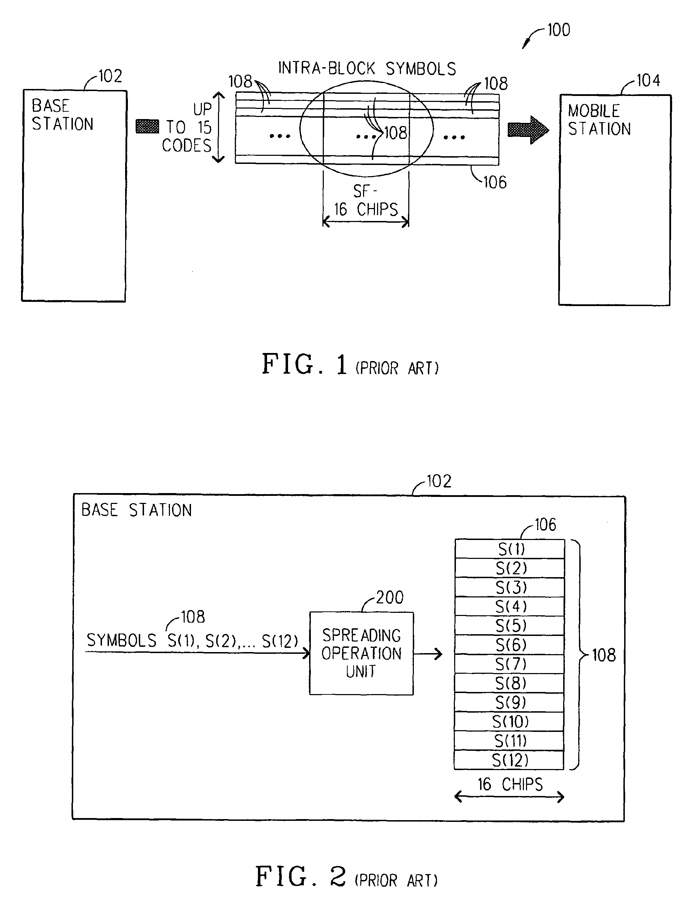

Referring to FIGURE 1 (PRIOR ART), there is illustrated a communications network 100 including a conventional base station 102 that communicates with a conventional mobile station 104 utilizing a traditional HSDPA transmission 106. As shown, the traditional HSDPA transmission 106 has SF 16 and up to 15 channelization codes which enable the high-data-rate transmission of multiple symbols 108. Even though there are 16 codes available at SF 16, the base station 102 normally does not use all 16 codes since part of the first one sixteenth branch of the code tree is used to signal CPICH and other common control channels. As a result, HSDPA is limited to using up to 15 codes at SF 16. Circuit-switch traffic may further consume more code branches, which leaves less than 15 SF 16 codes available for HSDPA communications in some cases. As further illustrated by the example in FIGURE 2 (PRIOR ART), the base station 102 has a spreading operation unit 200 that receives 12 symbols s(1), s(2)...s(12) and outputs 16 chips when 12 of the possible 15 spreading codes have been allocated to the mobile station 104. In this case, the base station 102 spreads the 12 symbols s(1), s(2)...s(12) such that each symbol is spread by a length-16 spreading sequence, and all of the symbols s(1), s(2)...s(12) are transmitted in parallel utilizing code-division multiplexing which form the HSPDA transmission 106. As a result of this particular type of transmission scheme, the mobile station 104 would typically employ a linear equalization receiver as described below to detect the symbols 108 located in the HSDPA transmission 106.

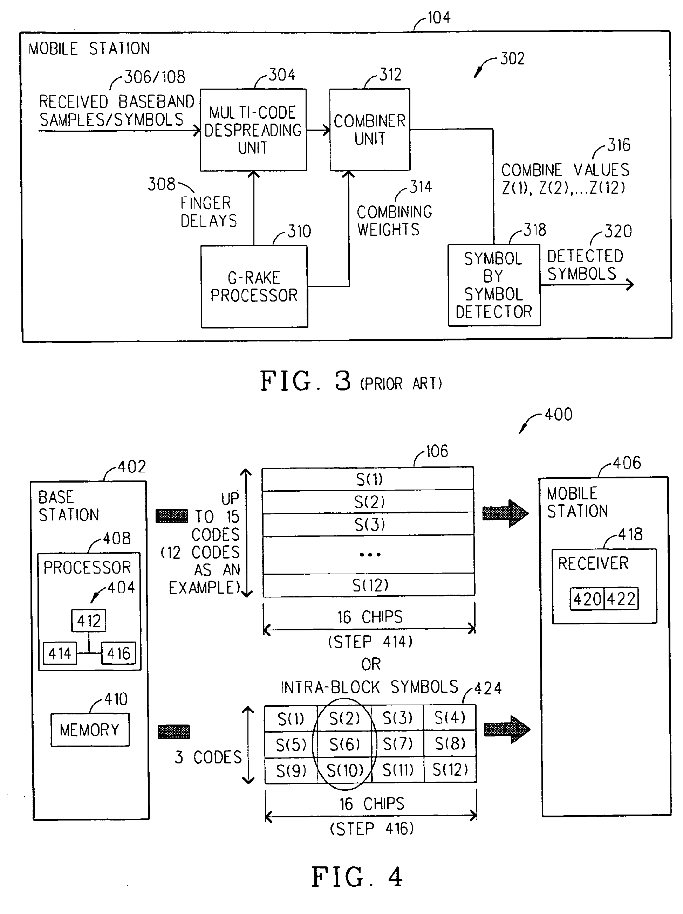

Referring to FIGURE 3 (PRIOR ART), there is shown a block diagram illustrating a mobile station 104 that has an exemplary linear equalization receiver 302 which could be used to detect the symbols 108 that are located in the HSDPA transmission 106. The linear equalization receiver 302 has a multi-code despreading unit 304 that correlates received baseband samples 306 (corresponding to HSDPA transmission 106) with spreading codes using a set of finger delays 308 which are supplied by a G-Rake processor 310. This produces one despread value per finger delay and per spreading code which are then combined within a combiner unit 312 using combining weights 314 supplied by the G-Rake processor 310. In particular, for each spreading code, a set of despread values are combined by the combiner unit 312 to produce a combined value per symbol period per code. Thus, if 12 symbols are transmitted in parallel within the HSDPA transmission 106, then the combiner unit 312 produces 12 combined values z(1), z(2) ... z(12) 316. A symbol-by-symbol detector 318 then detects each of the 12 combined values z(1), z(2)...z(12) 316 on a symbol-by-symbol basis and outputs the detected symbols or related information (e.g. soft bit values) 320. As discussed above, the base station 102 (utilizing the HSDPA transmission 106) and the mobile station 104 (utilizing the linear equalization scheme) work well with the relatively lower bit rates but they do not work well with higher bit rates like, for example, 64-QAM MIMO transmissions or when the mobile station 104 is limited by self interference (i.e. interference within the block of symbols 108).

The inventors in solving this problem propose several exemplary embodiments of a base station and a mobile station that work well with higher bits rates like, for example, 64-QAM MIMO transmissions or when the mobile station 104 is limited by self interference. In particular, the inventors believe that further performance enhancement can be achieved by nonlinear processing techniques, e.g., decision feedback equalization and/or joint detection, at the mobile station. The complexity of joint detection is however enormous when there are a large number of symbols in a symbol block. With the example of FIGURE 2, joint detection at the mobile station 104 is practically impossible for higher order modulations such as 16QAM and 64QAM. For example, with 16QAM, there are 16¹² joint hypotheses, which require computation resources far beyond what is available in a mobile station today. Thus, in order to further improve performance, the base station should use a root spreading codes based code assignment technique which enables the mobile station to effectively use a nonlinear processing technique, e.g. joint detection, when detecting the received signals. This is desirable in many high bit rate scenarios such as when the mobile station is close to the base station during which the radio channels are mildly dispersive and the mobile station's receiver performance is very much limited by overlapping symbols that are transmitted in the same symbol period. Thus, the mobile terminal could have significant improvement beyond the traditional linear equalization by jointly detecting the multiple symbols carried by the parallel channelization codes in the same symbol period. The proposed invention requires the base station to use the root spreading codes based code assignment technique to reduce the number of overlapping symbols carried in the signal transmitted to the mobile terminal. A detailed discussion to explain how all of this can be accomplished and enabled is provided next with respect to FIGURES 4-10.

Referring to FIGURE 4, there is illustrated a communications network 400 including a base station 402 that utilizes a root spreading codes based code assignment method 404 when communicating with a mobile station 406 in accordance with an embodiment of the present invention. In this embodiment, the base station 402 has a pool of up to 15 SF 16 codes available to serve the mobile station 406 and also has one or more processors 408 and possibly memory 410 (storage 410) that may include processor-executable instructions where the one or more processors 408 is adapted to interface with the memory 410 and uses hardware or executes the processor-executable instructions to implement the root spreading codes based code assignment method 404 (note: the one or more processors 408 and the possible memory 410 are implemented, at least partially, as some combination of software, firmware, hardware, or hard-coded logic). The root spreading codes based code assignment method 404 works as follows for an example where only root codes of a single SF are allowed. The base station 402 checks whether a root code has all of its SF 16 descendants (higher spreading factor descendants) assigned to the mobile station 406 (step 412). If no, then the base station 402 uses the SF 16 descendants to transmit symbols to the mobile station 406(step 414). If yes, then the base station 402 instead of using the SF 16 descendants, uses the root code to transmit the symbols to the mobile station 406 (step 416). For example, a root code of SF 4 has 4 descendants of SF 16. If all 4 of these SF 16 codes are assigned to the mobile station 406, then the base station 402 uses the root code of SF 4 instead. Thus, instead of sending 4 symbols using CDM of 4 codes, 4 symbols are sent using TDM. The process is repeated for each root code. The method 404 is desirable since it reduces the number of overlapping symbols, and thus enables the mobile station 406 to use nonlinear equalization or joint detection to detect the received symbols.

The base station 402 could determine whether using the root codes is possible in the first place based on the particular capabilities of the mobile station 406 (e.g., UE 406. For example, if the mobile station 406 has a receiver 418 with a non-linear equalizer unit 420, a joint-detection unit 422 and/or conforms to the new HSDPA releases where the present invention is supported, then the base station 402 during steps 412 and 414 takes multiple codes with SF 16 and reduces them to a single root code with a lower SF to transmit signals 424 to the mobile station 406. To illustrate how multiple codes with a higher SF can be reduced to a single code at a lower SF, consider the following example:
x= [1 1 -1 -1 1 1 -1 -1]
y= [1 1 -1 -1 -1 -1 1 1].

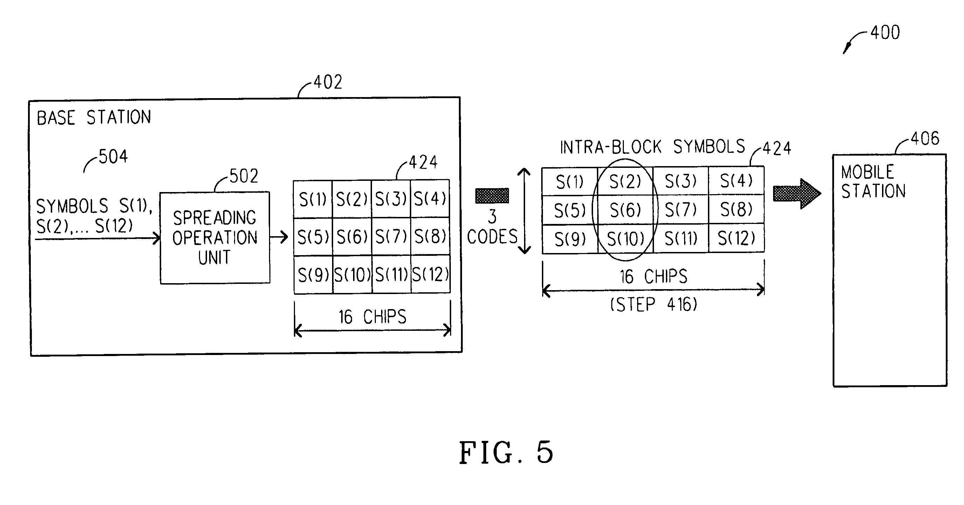

The length-8 sequences x and y are Hadamard sequences where they share a basic length-4 pattern of z= [1 1 -1 -1]. Thus, x= [z z] and y=[z, -z]. Sequence z is referred to as the root of sequences x and y at SF 4. Instead of modulating a symbol each on x and y through code-division multiplexing, the base station 402 can modulate a symbol on z in the first 4-chip interval and another symbol on z in the 2^{nd} 4-chip interval (i.e. time-division multiplexing). The latter approach reduces the number of overlapping symbols in the transmitted signal 424 which enables the mobile station 406 to effectively use a nonlinear processing technique, e.g. a joint detection, when detecting the received HSDPA signals 424. The latter approach also reduces peak-to-average power ratio, which is an important practical aspect of transmission. Another example of how the base station 402 can use root codes to transmit HSDPA signals 424 to the mobile station 406 is discussed in detail next with respect to FIGURES 5-8.

Referring to FIGURE 5, there is illustrated a communications network 400 including the base station 402 that communicates with the mobile station 406 utilizing an exemplary HSDPA transmission 424 in accordance with an embodiment of the present invention. In this example, the base station 402 replaces the conventional 12 codes of SF 16 transmission 106 used to serve the mobile station 406 with 3 codes of SF 4 transmission 424 if the 12 codes are from the same SF 4 root and then transmits the 3 SF 4 transmission 424 to the mobile station 406 (see FIGURE 4). In particular, the base station 402 has a spreading operation unit 502 that receives 12 symbols s(1), s(2)...s(12) 504 and uses 3 root codes at SF 4 to place 3 CDMA symbols in each of four different 4-chip intervals which form the 3 SF 4 transmission 424 that is transmitted to the mobile station 406. As can be seen, the base station 402 can transmit 12 symbols 504 in a single 16-chip interval to the mobile station 406 which is similar to what was shown in FIGURE 2 but in this scheme the number of overlapping intra-block symbols are reduced which enables the mobile station 406 to use joint detection or some other non-linear equalization technique to detect the 3 overlapping symbols in each symbol block.

In one embodiment, the present invention is possible in the first place since according to the OVSF code definition in WCDMA, the 4 channelization root codes at SF 4 could be represented as follows:
Ch_{4,0}: {1, 1, 1, 1}
Ch₄,₁: {1, 1, 1, -1}
Ch_{4,2}: {1, -1, 1, -1}
Ch_{4,3}: {1, -1, -1, 1}
In the above notation, the first subscript indicates the SF and the second subscript indicates the code index (see section 4.3.1.1 of the aforementioned technical specification "3rd Generation Partnership Project: Technical Specification Group Radio Access Network; Spreading and Modulation (FDD) (Release 7)" 3GPP TS 25.213 version 7.3, Sept., 2007).

Each of these root codes can be split into multiple descendant codes at a higher SF. For example, the root code Ch_{4,3} could be split into two descendant codes at SF 8 which are as follows:
Ch_{8,6}: { Ch_{4,3}, Ch_{4,3}} = {1, 1, -1, 1, 1, -1, -1, 1}
Ch_{8,7}: { Ch_{4,3}, -Ch_{4,3}} = {1, -1 -1, 1, 1, 1, 1, -1}.
Similarly, each of the SF 8 codes can be further split into two descendant codes at SF 16 as follows:
Ch_{16,2n}: {Ch_{8,n}, Ch_{8,n}}
Ch_{16,2n+1}: {Ch_{8,n}, -Ch_{8,n}}.
This is how the descendant codes of SF 16 in the traditional HSDPA transmission 106 relate to the root codes at SF 4 or 8 in the HSDPA transmission 424. As an example, the base station 402 may have Ch_{16,4}, Ch_{16,5}, Ch_{16,6}, ..., Ch_{16,15} available to serve the mobile station 406. However, since Ch_{16,4}, Ch_{16,5}, Ch_{16,6}, ..., Ch_{16,15} codes are the complete descendant codes of Ch_{4,1}, Ch_{4,2}, and Ch_{4,3} this means that the base station 402 can perform step 416 and transmit a HSDPA transmission signal 424 using the 3 SF 4 root codes to the mobile station 406. Of course, the base station 402 needs to first determine if the mobile station 406 is capable of receiving and detecting the HSDPA transmission signal 424 before sending the HSDPA transmission signal 424 to the mobile station 406 (step 416). For instance, such information can be signaled to the base station 402 by the mobile station 406.

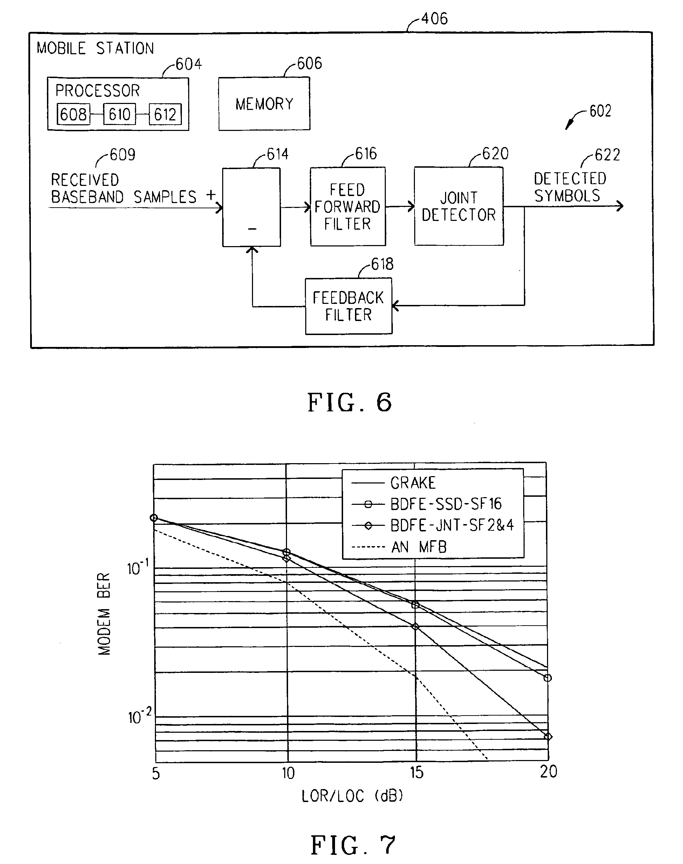

As shown in FIGURE 5, the base station 402 using the 12 SF 16 codes (during step 414) or the 3 root SF 4 codes (during step 416) results in the same number of symbols in a TTI (see also FIGURE 2). Also, as far as impact on other physical channels is concerned, both schemes maintain an orthogonality structure. However, using the 3 root SF 4 codes results in a smaller number of intra-block symbols, as illustrated in FIGURE 5, and thus facilitates the use of joint detection by the mobile station 406. Therefore, when the base station 402 implements step 416 and uses the 3 root SF 4 codes then the mobile station 406 instead of jointly detecting 12 16-QAM or 64-QAM symbols during every 16-chip block now only needs to jointly detect 3 16-QAM or 64-QAM symbols during every 4-chip block. An exemplary mobile station 406 that can jointly detect a HSDPA transmission signal 424 is described next with respect to FIGURE 6.

Referring to FIGURE 6, there is illustrated a block diagram of an exemplary mobile station 406 with an BDFE-JD receiver 602 that is capable of jointly detecting symbols received within the HSDPA transmission signal 424 to help suppress intra-block interference in accordance with an embodiment of the present invention. In this embodiment, the mobile station 406 has a BDFE-JD receiver 602 that includes one or more processors 604 and possibly memory 606 (storage 606) that may include processor-executable instructions where the one or more processors 604 is adapted to interface with the at least one memory 606 and uses hardware circuits or executes the processor-executable instructions to: (a) receive a signal on a control channel (e.g., HS-SCCH) from the base station 402, where the signal indicates a code allocation which is to be used to interact with the base station 402 (step 608) ; (b) receive baseband samples 609 (corresponding to HSDPA transmission 424) originated by the base station 402 (step 610); and (c) use a root code to detect the baseband samples 609 received from the base station 402 (step 612), if all its descendant codes are allocated according to the control channel (e.g., HS-SCCH) (note: the one or more processors 604 and the possible memory 606 are implemented, at least partially, as a combination of software, firmware, hardware, or hard-coded logic).

In one example, the BDFE-JD receiver 602 can detect the transmitted symbols using a feedforward filter 616, a feedback filter 618, and a joint detector 620. The feedback filter 618 is used to generate the baseband samples according to the detected symbols in previous symbol blocks, which are then subtracted from the received baseband samples using an adder 614. The self-interference from future symbol blocks are suppressed through the feedforward filter 616 using linear equalization and by treating the interference as colored noise. The intra-block interference on the current symbol block is alleviated through joint detection by the joint detector 620. The feedforward filter 616 can be code-specific or code-averaged. More information about an exemplary BDFE can be found in: (1) pending co-assigned U.S. Patent Application Serial Nos. 12/035,846 and 12/058,082 respectively filed on February 22, 2008 and March 28, 2008; and (2) G. E. Bottomley, "Block equalization and generalized MLSE arbitration for the HSPA WCDMA uplink," in Proceedings IEEE Vehicular Technology Conference Fall 2008. The latter document also describes generalized MLSE arbitration, another form of joint detection that could be used with lower SF signals.

The inventors have performed simulation tests using a mobile station 406 (with a single antenna BDFE receiver) and a mobile station 406 (with a dual antenna BDFE receiver) to confirm the benefits when the base station 402 implements the root spreading codes based code assignment method 404 and when the corresponding mobile station 406 implements a joint detection technique to detect signals received from the base station 402. In the simulation tests, a comparison was made between current HSDPA transmission 106 (12 codes of SF 16) and the proposed HSDPA transmission 424 (3 codes of SF 4) which serve the scheduled mobile station. An overhead (pilot channel, etc.) of 20% of the total power of the base station 402 was also assumed during the simulation tests.

In the simulation tests, a case 3 channel profile was used which included four chip-spaced paths at delays 0, 1, 2 and 3 with average relative powers 0, -3, -6 and -9 dB. Independent Rayleigh fading was assumed while 1000 fading realizations were generated and applied to a mini-frame of 50 blocks (each block either 16 chips (old format) or 4 chips (new format)). At the mobile terminal 406, it was assumed that all overhead channels (pilot channel, etc.) had been perfectly subtracted. For G-Rake, a generous finger assignment had been made where the finger delays on a chip-spaced grid had -8 to 10 chip periods which was used to despread 12 SF 16 HSDPA transmissions 126. For the BDFE-JNT receiver which despreads the 3 SF 4 HSDPA transmissions 424, a time-varying, chip-level, code-averaged feedforward filter was used. The processing delays used were the same as for G-Rake. For the feedback filter (s), all past block ISI was subtracted. A simple semi-analytical bound on performance was evaluated as well during the simulation tests.

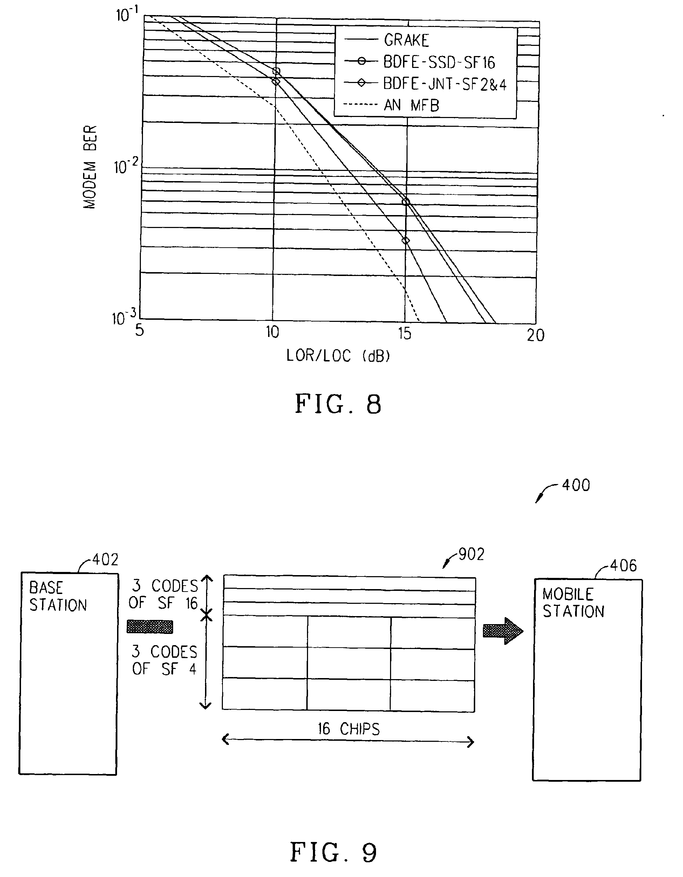

The simulation results for the single-antenna BDFE-JD mobile station 406 and the dual-antenna BDFE-JD mobile station 406 are shown in FIGURES 7 and 8, respectively. It can be seen that though BDFE with symbol-by-symbol detection (bdfe-ssd-SF16) does not improve the performance beyond G-Rake by much, while BDFE with joint detection (bdfe-jnt-SF2&4) offers significant improvement (see Table 1). Note in this case that one root code is SF 2 whereas in the other case the other root code is SF 4. The "grake" corresponds to the generalized receiver performance and "an mfb" corresponds to the matched filter performance bound in FIGURES 7 and 8. The inventors believe that some of the gain is due to the fact that at lower SF, interblock interference is more significant, so that the feedback filter provides more gain while the rest of the gain is from performing joint detection of the 3 16-QAM symbols within a block. These simulation results are for 16-QAM and it is believed that the gains would be higher for 64-QAM.

**TABLE 1**

| Modem BER | # receive antennas | Gain (dB) |
|---|---|---|
| 0.02 | 1 | 3.0 |
| | 2 | 0.8 |
| 0.002 | 2 | 1.5 |

In view of the foregoing, it can be seen that an allocation of 4 SF 16 codes from the same SF 4 root can be replaced by the root code of SF 4 itself, when the base station 402 can utilize these codes to serve the same HSDPA mobile station 406. In addition, the base station 402 if desired can replace a pair of SF 16 codes with a SF 8 root when a SF 4 root is not available. Plus, the base station 402 can use a SF 2 root if 8 of the SF 16 codes are from the same SF 2 root. In general, a mix of codes of different spreading factors can be used. If all SF are allowed, then the procedure would be to check if all descendents of the +1 -1 SF2 root code are assigned. If so, these 8 codes would be replaced by the 1 SF2 code and one SF 4 root code +1 +1 -1 -1 would be considered next. If not, then 3 root codes at SF 4 would be considered: +1 +1 -1 -1, +1 -1 +1 -1, and +1 -1 -1 +1. After SF 4, SF 8 root codes would be considered. This would minimize the number of codes used. In other situations, it may be that only root codes of SF 4 are allowed. Furthermore, it should be appreciated that there are also different embodiments associated with the present invention some of which are discussed next with respect to FIGURES 9-10.

Referring to FIGURE 9, there is illustrated an example of a base station 402 using 3 codes of SF 4 (when 12 SF 16 codes can be replaced by the 3 root SF 4 codes without loss of orthogonality to other users) and 3 codes of SF 16 within a HSDPA transmission 902 transmitted to the mobile station 406 in accordance with another embodiment of the present invention. For instance, this embodiment may be implemented when in a high-data-rate reception scenario when the base station 402 has more than 12 SF 16 codes available to serve a HSDPA mobile station 406. In this case, the mobile station's joint detector can be applied to the SF 4 symbols to produce estimates for these symbols while the interference from the SF 16 symbols can be treated as colored noise and suppressed in the feedforward filter. The interference from the SF 4 symbols to the SF 16 symbols can be removed via subtraction before detecting those SF 16 symbols. This type of process is generally known as successive interference cancellation (SIC). If desired, a further iterative process in the form of multistage SIC could be implemented by the mobile station 406 which could further help improve the performance. In this case, the mobile station 406 after detecting the SF 16 symbols would remove their interference prior to detecting the SF 4 symbols for a second time.

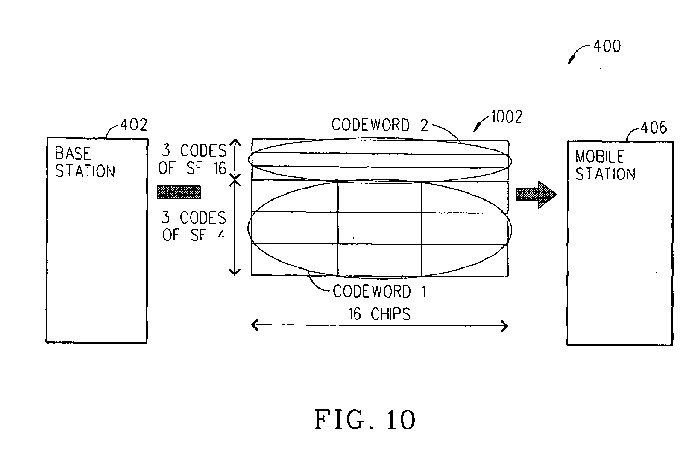

This particular embodiment could be enhanced further, if desired. FIGURE 10 illustrates a scenario where the base station 402 forms separate codewords by having the short symbols (root code SF 4) form codeword 1 and the long symbols (SF 16 descendants) form codeword 2 which are part of an exemplary HSDPA transmission 1002 that is transmitted to the mobile station 406 in accordance with another embodiment of the present invention. Codewords are created using some form of Forward Error Correction (FEC) encoding, such as turbo codes. An error detection code, such as a CRC, is often used as well. This is desirable since when SIC is implemented it is attractive to include the coding gain in signal detection but this particular embodiment would also require a change to the standard. To implement this embodiment, the mobile station 406 could use a BDFE-JD receiver to detect the short symbols and then decode the detected short symbols using a turbo-decoder where the SIC can be performed based on the re-encoded bits. If there is a CRC for each codeword and the CRC checks, then SIC using the hard decisions is performed. Otherwise, the turbo-decoder can further generate soft values to facilitate soft subtraction during the SIC process. After the SIC process, the mobile station 406 may detect and decode the long symbols using a G-Rake receiver or another BDFE-JD receiver.

The present invention also has several other benefits and advantages some of which are as follows (for example).
1. The changing of the spreading factors according to the embodiments described herein does not have any impact on legacy mobile stations being served by the base station 402 at the same time mobile stations 406 are being served.
2. The embodiments described herein do not require any additional per-TTI signalling between the base station 402 and mobile station 406. The scheduled mobile station 406 learns its code allocation (e.g. SF16) from the HS-SCCH, which uses the exact same signaling format as in the past. There only needs to be some initial signaling so that both base station 402 and mobile station 406 understand that groups of SF16 codes will be replaced by root codes when possible. When the mobile station 406 and the base station 402 are conforming to the embodiments described herein then whenever there are four codes of SF=16 allocated from the same root of SF 4, the root SF 4 code will be used instead. For example, the HS-SCCH may signal the following codes are allocated to a scheduled mobile station 406:
   {Ch_{16,3}, Ch_{16,4}, Ch_{16,5}, Ch_{16,6}, Ch_{16,7}, Ch_{16,8}, Ch_{16,9}, Ch_{16,10}, Ch_{16,11}, Ch_{16,12}, Ch_{16,13}, Ch_{16,14}, Ch_{16,15}}.

Then, the base station 402 and mobile station 406 will both agree that the actual channelization codes used are {Ch_{16,3}, Ch_{4,1}, Ch_{4,2}, Ch_{4,3}}.
3. In the future, if TDM is used to separate pilot, control, and traffic channels, then the base station 402 could use the entire code tree to serve a HSDPA mobile station 406. In this case, the base station 402 could use 4 codes of SF 4, 2 codes of SF 2 or even 1 code of SF 1 (without spreading) to transmit an HSDPA signal to the HSDPA mobile station 406.

Although several embodiments of the present invention have been illustrated in the accompanying Drawings and described in the foregoing Detailed Description, it should be understood that the invention is not limited to the disclosed embodiments, but instead is also capable of numerous rearrangements, modifications and substitutions without departing from the scope of the invention as set forth and defined by the following claims.

## Claims

1. A base station (402) adapted to use a root spreading code based code assignment to transmit signals (106, 424, 902, 1002) to a mobile station (406), the base station comprising:
one or more processors (408) adapted to:
check (412) whether a root code of a lower spreading factor, SF, has all of its higher spreading factor descendants assigned to the mobile station;
if no, then use (414) the higher spreading factor descendants to transmit symbols to the mobile station; and
if yes, then use (416) the root code to transmit the symbols to the mobile station.

2. The base station of Claim 1, wherein the root code and the higher spreading factor descendants both maintain an orthogonality structure.

3. The base station of Claim 1, wherein the root code and the higher spreading factor descendants result in a same number of symbols being used in a transmission time interval.

4. The base station of Claim 1, wherein the use of the root code results in a smaller number of intra-block symbols being used when compared to a number of intra-block symbols being used by the higher spreading factor descendants.

5. The base station of Claim 1, wherein the at least one processor is further adapted to execute processor-executable instructions to utilize both the root code and the higher spreading factor descendants from other root codes to serve the mobile station.

6. The base station of Claim 1, wherein the at least one processor is further adapted to execute processor-executable instructions to utilize a plurality of higher spreading factor descendants from a first set of root codes to form a first codeword and utilize a second of set of root codes to form a second codeword to serve the mobile station.

7. The base station of Claim 1, wherein the at least one processor is further adapted to execute processor-executable instructions to use a control channel to signal a code allocation to the mobile station.

8. The base station of Claim 1, wherein the at least one processor is further adapted to execute processor-executable instructions to use initial signaling to inform the mobile station that the higher spreading factor descendants are going to be replaced by the root code when allowed.

9. A method (404) for transmitting symbols to a mobile station (406), said method comprising the steps of:
checking (412) whether a root code of a lower spreading factor, SF, has all of its higher spreading factor descendants assigned to the mobile station;
if no, then using (414) the higher spreading factor descendants to transmit symbols to the mobile station; and
if yes, then using (416) the root code to transmit the symbols to the mobile station.

10. The method of Claim 9, further comprising a step of utilizing both the root code and the higher spreading factor descendants from other root codes to serve the mobile station.

11. The method of Claim 9, further comprising a step of utilizing a plurality of higher spreading factor descendants from a first set of root codes to form a first codeword and utilize a second of set of root codes to form a second codeword to serve the mobile station.

12. The method of Claim 9, further comprising a step of using a control channel to signal a code allocation to the mobile station.

13. The method of Claim 9, further comprising a step of using initial signaling to inform the mobile station that the assigned codes are going to be replaced by a root code when possible.

14. A mobile station (406) adapted to suppress intra-block interference in received samples, said mobile station comprising:
a receiver (418, 602) that includes:
one or more processors (604) adapted to:
receive (608) a signal on a control channel from a base station (402), where the signal indicates a code allocation which is to be used to interact with the base station;
receive (610) baseband samples (609) originated by the base station; and further characterized to:
use (612) a root code to detect the baseband samples received from the base station, if all descendant codes of the root code are allocated according to the received signal on the control channel.

15. The mobile station of Claim 14, wherein the receiver further includes a joint detector (422, 620) adapted to suppress intra-block interference when detecting the baseband samples.

16. The mobile station of Claim 14, wherein the receiver further includes a nonlinear equalization unit (420) adapted to suppress intra-block interference when detecting the baseband samples.

17. A method for detecting symbols at a mobile station (406), said method comprising the steps of:
receiving (608) a signal on a control channel from a base station (402), where the signal indicates a code allocation which is to be used to interact with the base station;
receiving (610) baseband samples (609) corresponding to a signal originated by the base station; and further **characterized by**:
using (612) a root code to detect the symbols received from the base station, if all descendant codes of the root code are allocated according to the received signal on the control channel.

18. The method of Claim 17, further comprising a step of using joint detection that suppresses intra-block interference when detecting the symbols.

19. The method of Claim 17, further comprising a step of using nonlinear equalization that suppresses intra-block interference when detecting the symbols.

20. A communications network (400), comprising:
a mobile station (406); and
base station (402) including one or more processors (408) adapted to:
detect (412) whether a root code of a lower spreading factor, SF, has all of its descendants assigned to the mobile station;
if no, then use (414) the descendants to transmit symbols to the mobile station; and
if yes, then use (416) the root code to transmit the symbols to the mobile station.

## Patentansprüche

1. Basisstation (402), ausgelegt zum Verwenden einer Root-Spreading-Code-basierten Codezuordnung zum Übertragen von Signalen (106, 424, 902, 1002) an eine Mobilstation (406), wobei die Basisstation umfasst:
einen oder mehrere Prozessoren (408), die ausgelegt sind zum:
Überprüfen (412), ob ein Root-Code eines geringeren Spreading-Faktors, SF, alle von dessen höheren Spreading-Faktor-Descendants der Mobilstation zugeordnet hat; wobei
wenn dies nicht der Fall ist, Verwenden (414) der höheren Spreading-Faktor-Descendants, um Symbole an die Mobilstation zu übertragen; und
wenn dies der Fall ist, Verwenden (416) des Root-Codes, um die Symbole an die Mobilstation zu übertagen.

2. Basisstation nach Anspruch 1, wobei der Root-Code und die höheren Spreading-Faktor-Descendants beide eine Orthogonalitätsstruktur aufrechterhalten.

3. Basisstation nach Anspruch 1, wobei der Root-Code und die höheren Spreading-Faktor-Descendants zu einer gleichen Anzahl von Symbolen führen, die in einem Übertragungszeitintervall verwendet werden.

4. Basisstation nach Anspruch 1, wobei die Verwendung des Root-Codes zu einer geringeren Anzahl von Intra-Block-Symbolen führt, die verwendet werden, verglichen mit einer Anzahl von Intra-Block-Symbolen, die durch die höheren Spreading-Faktor-Descendants verwendet werden.

5. Basisstation nach Anspruch 1, wobei der zumindest eine Prozessor ferner ausgelegt ist zum Ausführen von durch den Prozessor ausführbaren Anweisungen, um sowohl den Root-Code als auch die höheren Spreading-Faktor-Descendants von anderen Root-Codes zu verwenden, zum Versorgen der Mobilstation.

6. Basisstation nach Anspruch 1, wobei der zumindest eine Prozessor ferner ausgelegt ist zum Ausführen von durch den Prozessor ausführbaren Anweisungen zum Verwenden einer Vielzahl von höheren Spreading-Faktor-Descendants von einem ersten Satz von Root-Codes zum Ausbilden eines ersten Code-Worts und zum Verwenden eines zweiten Satzes von Root-Codes zum Ausbilden eines zweiten Code-Worts, zum Versorgen der Mobilstation.

7. Basisstation nach Anspruch 1, wobei der zumindest eine Prozessor ferner ausgelegt ist zum Ausführen von durch den Prozessor ausführbaren Anweisungen, um einen Steuerkanal zu verwenden, um eine Code-Zuweisung an die Mobilstation zu signalisieren.

8. Basisstation nach Anspruch 1, wobei der zumindest eine Prozessor ferner ausgelegt ist zum Ausführen von durch den Prozessor ausführbaren Anweisungen, um eine anfängliche Signalisierung zu verwenden, um die Mobilstation zu informieren, dass die höheren Spreading-Faktor-Descendants durch den Root-Code ersetzt werden, wenn dies erlaubt ist.

9. Verfahren (404) zum Übertragen von Symbolen an eine Mobilstation (406), wobei das Verfahren die Schritte umfasst zum:
Überprüfen (412), ob ein Root-Code eines geringeren Spreading-Faktors, SF, alle von dessen höheren Spreading-Faktor-Descendants der Mobilstation zugeordnet hat; wobei
wenn dies nicht der Fall ist, die höheren Spreading-Faktor-Descendants verwendet werden (414), um Symbole an die Mobilstation zu übertragen; und
wenn dies der Fall ist, der Root-Code verwendet wird (416), um die Symbole an die Mobilstation zu übertragen.

10. Verfahren nach Anspruch 9, ferner mit einem Schritt zum Verwenden sowohl des Root-Codes und der höheren Spreading-Faktor-Descendants von anderen Root-Codes, um die Mobilstation zu versorgen.

11. Verfahren nach Anspruch 9, ferner mit einem Schritt zum Verwenden einer Vielzahl von höheren Spreading-Faktor-Descendants von einem ersten Satz von Root-Codes zum Ausbilden eines ersten Code-Worts und zum Verwenden eines zweiten Satzes von Root-Codes zum Ausbilden eines zweiten Code-Worts, um die Mobilstation zu versorgen.

12. Verfahren nach Anspruch 9, ferner mit einem Schritt zum Verwenden eines Steuerkanals zum Signalisieren einer Code-Zuweisung an die Mobilstation.

13. Verfahren nach Anspruch 9, ferner mit einem Schritt zum Verwenden einer anfänglichen Signalisierung, um die Mobilstation zu informieren, dass die zugeordneten Codes durch einen Root-Code ersetzt werden, wenn dies möglich ist.

14. Mobilstation (406), die ausgelegt ist zum Unterdrücken einer Intra-Block-Interferenz in empfangenen Abtastungen, wobei die Mobilstation umfasst:
einen Empfänger (418, 602), der umfasst:
einen oder mehrere Prozessoren (604), die ausgelegt sind zum:
Empfangen (608) eines Signals auf einem Steuerkanal von einer Basisstation (402), wobei das Signal eine Code-Zuweisung anzeigt, die verwendet werden soll, um mit der Basisstation zu kommunizieren;
Empfangen (610) von Basisbandabtastungen (609), die ihren Ursprung in der Basisstation haben; und
ferner **gekennzeichnet durch**:
Verwenden (612) eines Root-Codes zum Erfassen der Basisbandabtastungen, die von der Basisstation empfangen werden, wenn alle Code-Descendants des Root-Codes gemäß dem empfangenen Signal auf dem Steuerkanal zugewiesen werden.

15. Mobilstation nach Anspruch 14, wobei der Empfänger ferner einen gemeinsamen Detektor (422, 620) enthält, der ausgelegt ist zum Unterdrücken einer Intra-Block-Interferenz, wenn die Basisbandabtastungen erfasst werden.

16. Mobilstation nach Anspruch 14, wobei der Empfänger ferner eine nicht-lineare Entzerrungseinheit (420) enthält, die ausgelegt ist zum Unterdrücken einer Intra-Block-Interferenz, wenn die Basisbandabtastungen erfasst werden.

17. Verfahren zum Erfassen von Symbolen an einer Mobilstation (406), wobei das Verfahren die Schritte umfasst zum:
Empfangen (608) eines Signals auf einem Steuerkanal von einer Basisstation (402), wobei das Signal eine Code-Zuweisung anzeigt, die verwendet werden soll, um mit der Basisstation zu kommunizieren;
Empfangen (610) von Basisbandabtastungen (609), die mit einem Signal zusammenhängen, das seinen Ursprung in der Basisstation hat; und ferner **gekennzeichnet ist durch**:
Verwenden (612) eines Root-Codes zum Erfassen der Symbole, die von der Basisstation empfangen werden, wenn alle Code-Descendants des Root-Codes gemäß dem empfangenen Signal auf dem Steuerkanal zugewiesen werden.

18. Verfahren nach Anspruch 17, ferner mit einem Schritt zum Verwenden einer gemeinsamen Erfassung, die eine Intra-Block-Interferenz unterdrückt, wenn die Symbole erfasst werden.

19. Verfahren nach Anspruch 17, ferner mit einem Schritt zum Verwenden einer nicht-linearen Entzerrung, die eine Intra-Block-Interferenz unterdrückt, wenn die Symbole erfasst werden.

20. Kommunikationsnetz (400) mit:
einer Mobilstation (406); und
einer Basisstation (402) mit einem oder mehreren Prozessoren (408), die ausgelegt sind zum:
Erfassen (412), ob ein Root-Code eines geringeren Spreading-Faktors, SF, alle von dessen Descendants Mobilstation zugeordnet hat;
wenn dies nicht der Fall ist, Verwenden (414) der Descendants, um Symbole an die Mobilstation zu übertragen; und
wenn dies der Fall ist, Verwenden (416) des Root-Code zu verwenden (416), um die Symbole an die Mobilstation zu übertragen.

## Revendications

1. Station de base (402) conçue pour utiliser une attribution de code fondée sur un code d'étalement de racine afin d'émettre des signaux (106, 424, 902, 1002) vers une station mobile (406), la station de base comprenant :
un ou plusieurs processeurs (408) conçus pour :
vérifier (412) si un code racine ayant un facteur d'étalement, SF (pour « spreading factor »), inférieur possède tous ses descendants à facteur d'étalement supérieur qui sont attribués à la station mobile ;
si tel n'est pas le cas, utiliser (414) les descendants à facteur d'étalement supérieur pour émettre des symboles vers la station mobile ; et
si tel est le cas, utiliser (416) le code racine pour émettre les symboles vers la station mobile.

2. Station de base selon la revendication 1, dans laquelle le code racine et les descendants à facteur d'étalement supérieur respectent tous une structure orthogonale.

3. Station de base selon la revendication 1, dans laquelle le code racine et les descendants à facteur d'étalement supérieur aboutissent à utiliser le même nombre de symboles dans un intervalle de temps d'émission.

4. Station de base selon la revendication 1, dans laquelle l'utilisation du code racine fait que l'on utilise un nombre inférieur de symboles internes aux blocs par comparaison au nombre des symboles internes aux blocs utilisés par les descendants à facteur d'étalement supérieur.

5. Station de base selon la revendication 1, dans laquelle ledit au moins un processeur est en outre conçu pour exécuter des instructions exécutables par processeur pour utiliser à la fois le code racine et les descendants à facteur d'étalement supérieur d'autres codes racine pour desservir la station mobile.

6. Station de base selon la revendication 1, dans laquelle ledit au moins un processeur est en outre conçu pour exécuter des instructions exécutables par processeur afin d'utiliser une pluralité de descendants à facteur d'étalement supérieur provenant d'un premier ensemble de codes racine afin de former un premier mot de code et afin d'utiliser un second ensemble de codes racine pour former un second mot de code pour desservir la station mobile.

7. Station de base selon la revendication 1, dans laquelle ledit au moins un processeur est en outre conçu pour exécuter des instructions exécutables par processeur afin d'utiliser un canal de commande pour signaler une attribution de code à la station mobile.

8. Station de base selon la revendication 1, dans laquelle ledit au moins un processeur est en outre conçu pour exécuter des instructions exécutables par processeur afin d'utiliser une signalisation initiale pour informer la station mobile que les descendants à facteur d'étalement supérieur seront remplacés par le code racine lorsque cela est possible.

9. Procédé (404) d'émission de symboles vers une station mobile (406), ledit procédé comprenant les étapes consistant à :
vérifier (412) si un code racine ayant un facteur d'étalement, SF (pour « spreading factor »), inférieur possède tous ses descendants à facteur d'étalement supérieur qui sont attribués à la station mobile ;
si tel n'est pas le cas, utiliser (414) les descendants à facteur d'étalement supérieur pour émettre des symboles vers la station mobile ; et
si tel est le cas, utiliser (416) le code racine pour émettre les symboles vers la station mobile.

10. Procédé selon la revendication 9, comprenant en outre l'étape consistant à utiliser à la fois le code racine et les descendants à facteur d'étalement supérieur d'autres codes racine pour desservir la station mobile.

11. Procédé selon la revendication 9, comprenant en outre l'étape consistant à utiliser une pluralité de descendants à facteur d'étalement supérieur provenant d'un premier ensemble de codes racine afin de former un premier mot de code et à utiliser un second ensemble de codes racine pour former un second mot de code pour desservir la station mobile.

12. Procédé selon la revendication 9, comprenant en outre l'étape consistant à utiliser un canal de commande pour signaler une attribution de code à la station mobile.

13. Procédé selon la revendication 9, comprenant en outre l'étape consistant à utiliser une signalisation initiale pour informer la station mobile que les codes attribués seront remplacés par un code racine lorsque cela est possible.

14. Station mobile (406) conçue pour supprimer les interférences internes au bloc dans des échantillons reçus, ladite station mobile comprenant :
un récepteur (418, 602) qui comprend :
un ou plusieurs processeurs (604) conçus pour :
recevoir (608) un signal sur un canal de commande en provenance d'une station de base (402), le signal indiquant une attribution de code à utiliser pour interagir avec la station de base ;
recevoir (610) des échantillons en bande de base (609) provenant de la station de base ; et
**caractérisé en outre par** :
l'utilisation (612) d'un code racine pour détecter les échantillons en bande de base reçus de la station de base, si tous les codes descendants du code racine sont attribués conformément au signal reçu sur le canal de commande.

15. Station mobile selon la revendication 14, dans laquelle le récepteur comprend en outre un détecteur conjoint (422, 620) conçu pour supprimer les interférences internes au bloc lors de la détection des échantillons en bande de base.

16. Station mobile selon la revendication 14, dans laquelle le récepteur comprend en outre une unité d'égalisation non linéaire (420) conçue pour supprimer les interférences internes au bloc lors de la détection des échantillons en bande de base.

17. Procédé de détection de symboles sur une station mobile (406), ledit procédé comprenant les étapes consistant à :
recevoir (608) un signal sur un canal de commande en provenance d'une station de base (402), le signal indiquant une attribution de code à utiliser pour interagir avec la station de base ;
recevoir (610) des échantillons en bande de base (609) correspondant à un signal provenant de la station de base ; et
**caractérisé en outre par** l'étape consistant à :
utiliser (612) un code racine pour détecter les symboles reçus de la station de base, si tous les codes descendants du code racine sont attribués conformément au signal reçu sur le canal de commande.

18. Procédé selon la revendication 17, comprenant en outre l'étape consistant à utiliser la détection conjointe qui supprime les interférences internes au bloc lors de la détection des symboles.

19. Procédé selon la revendication 17, comprenant en outre l'étape consistant à utiliser une égalisation non linéaire qui supprime les interférences internes au bloc lors de la détection des symboles.

20. Réseau de communication (400), comprenant :
une station mobile (406) ; et
une station de base (402) comprenant un ou plusieurs processeurs (408) conçus pour :
détecter (412) si un code racine ayant un facteur d'étalement, SF (pour « spreading factor »), inférieur possède tous ses descendants attribués à la station mobile ;
si tel n'est pas le cas, utiliser (414) les descendants pour émettre des symboles vers la station mobile ; et
si tel est le cas, utiliser (416) le code racine pour émettre les symboles vers la station mobile.
